# EUROPEAN PATENT APPLICATION

(11) **EP 4 664 867 A1**
(43) Date of publication of application: **17.12.2025**
(21) Application number: 24767297.5
(22) Date of filing: 07.02.2024
(51) Int. Cl.: H04M 1/72412, H04M 1/72469

(54) **SYSTEM FOR IDENTIFYING EXTERNAL ELECTRONIC DEVICE CONNECTED TO ELECTRONIC DEVICE, ELECTRONIC DEVICE, AND METHOD FOR IDENTIFYING EXTERNAL ELECTRONIC DEVICE CONNECTED TO ELECTRONIC DEVICE**

(30) Priority: 06.03.2023 KR 20230029480; 07.06.2023 KR 20230072970
(71) Applicant: Samsung Electronics Co., Ltd., Suwon-si, Gyeonggi-do 16677 (KR)
(72) Inventor: KWON, Bumjun, Suwon-si Gyeonggi-do 16677 (KR); KWAG, Sungsu, Suwon-si Gyeonggi-do 16677 (KR); KIM, Iljoo, Suwon-si Gyeonggi-do 16677 (KR); SHIN, Hyejin, Suwon-si Gyeonggi-do 16677 (KR); LEE, Choonghoon, Suwon-si Gyeonggi-do 16677 (KR); JEON, Youngbae, Suwon-si Gyeonggi-do 16677 (KR); HUH, Junho, Suwon-si Gyeonggi-do 16677 (KR)
(74) Representative: Gulde & Partner
(86) International application number: PCT/KR2024/001782
(87) International publication number: WO 2024/186008

(57) **Abstract**

An electronic device according to one embodiment may comprise a communication module and a processor. The processor according to one embodiment may, upon confirming receipt of a connection request from a first external electronic device through the communication module, confirm whether a second external electronic device is connected to the electronic device. The processor according to one embodiment may, upon confirming that the second external electronic device is not connected to the electronic device, complete a connection to the first external electronic device. The processor according to one embodiment may, upon completion of the connection to the first external electronic device, display, in a partial area of the electronic device, a first color capable of identifying the first external electronic device, so as to indicate that the first external electronic device is connected to the electronic device.

## Description

### [Technical Field]

The disclosure relates to a system for identifying an external electronic device connected to an electronic device, an electronic device, and a method of identifying an external electronic device connected to an electronic device.

### [Background Art]

In a multi-device environment, information may be shared through connections between electronic devices (for example, connection between a smartphone and a smart watch and/or connection between a smart watch and a smart TV).

Further, information may be shared through connections between one electronic device and a plurality of electronic devices (for example, connections between a plurality of electronic devices of a plurality of family members and a smart TV).

### [Detailed Description of the Invention]

### [Technical Solution]

An electronic device according to an embodiment may include a communication module and a processor.

When reception of a connection request from a first external electronic device is identified through the communication module, the processor according to an embodiment may identify whether a second external electronic device is connected to the electronic device.

When it is identified that the second external electronic device is not connected to the electronic device, the processor according to an embodiment may complete a connection to the first external electronic device.

When the connection to the first external electronic is completed, the processor according to an embodiment may display a first color for identifying the first external electronic device in partial areas of the electronic device to inform that the first external electronic device is connected to the electronic device.

A system for identifying an external electronic device connected to an electronic device according to an embodiment may include an electronic device configured to, in case that it is identified that a second external electronic device is not connected to the electronic device according to a connection request of a first external electronic device, complete the connection to the first external electronic device and, in case that the connection to the first external electronic device is completed, display a first color for identifying the first external electronic device in partial areas of the electronic device to inform that the first external electronic device is connected to the electronic device.

The system according to an embodiment may make a request for a connection to the electronic device and, when the connection to the electronic device is completed in response to the request for the connection, display the first color in the partial areas of the first external electronic device.

A method by which an electronic device identifies an external electronic device connected to the electronic device according to an embodiment may include an operation of, when reception of a connection request from a first external electronic device is identified, identifying whether a second external electronic device is connected to the electronic device.

The method according to an embodiment may include an operation, when it is identified that the second external electronic device is not connected to the electronic device, completing the connection to the first external electronic device.

The method according to an embodiment may include an operation of, when the connection to the first external electronic device is completed, displaying a first color for identifying the first external electronic device in partial areas of the electronic device to inform that the first external electronic device is connected to the electronic device.

A method of identifying an external electronic device connected to an electronic device according to an embodiment may include an operation of, by the electronic device, when it is identified that a second external electronic device is not connected to the electronic device according to a connection request of a first external electronic device, completing the connection to the first external electronic device and, when the connection to the first external electronic device is completed, displaying a first color for identifying the first external electronic device in partial areas of the electronic device to inform that the first external electronic device is connected to the electronic device.

### [Brief Description of Drawings]

FIG. 1 is a block diagram of an electronic device within a network environment according to an embodiment.
FIGS. 2A to 2C are diagrams illustrating a system for identifying an external electronic device connected to the electronic device.
FIG. 3 is a block diagram of the electronic device according to an embodiment.
FIG. 4 is a block diagram of the external electronic device according to an embodiment.
FIGS. 5A to 5C are diagrams illustrating an operation in which the external electronic device registers a color according to an embodiment.
FIG. 6 is a diagram illustrating an operation in which the external electronic device searches for a connectable electronic device according to an embodiment.
FIGS. 7A and 7B are diagrams illustrating an operation in which the electronic device displays a color for identifying the external electronic device according to an embodiment.
FIGS. 8A to 8C are diagrams illustrating an operation in which the external electronic device is connected to the electronic device according to an embodiment.
FIG. 9 is a flowchart illustrating an operation in which the electronic device identifies the external electronic device connected to the electronic device according to an embodiment.
FIG. 10 is a flowchart illustrating an operation in which the electronic device identifies the external electronic device connected to the electronic device according to an embodiment.
FIG. 11 is a flowchart illustrating an operation of identifying the external electronic device connected to the electronic device according to an embodiment.

### [Mode for Carrying out the Invention]

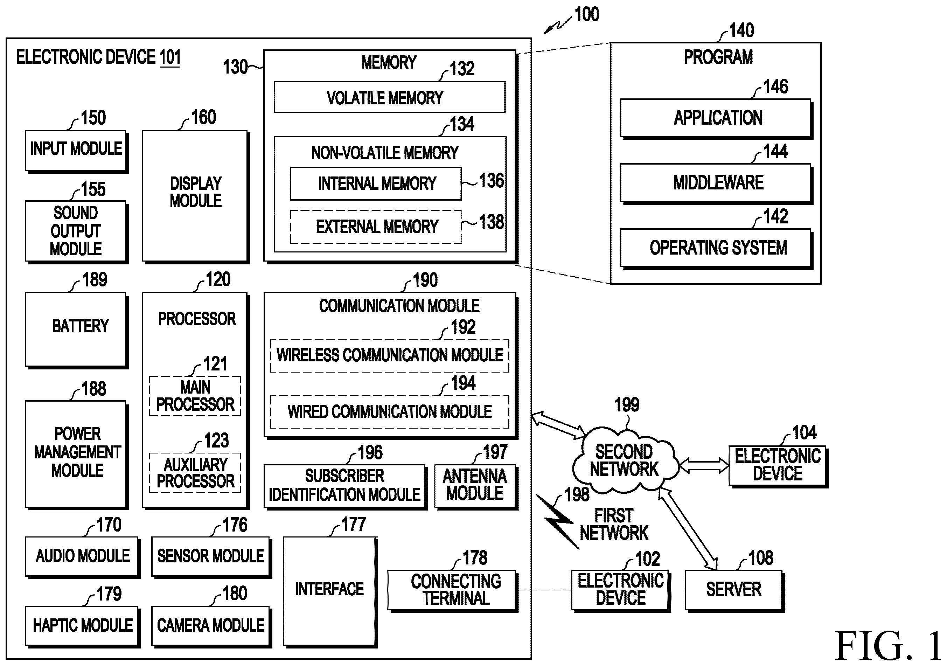

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

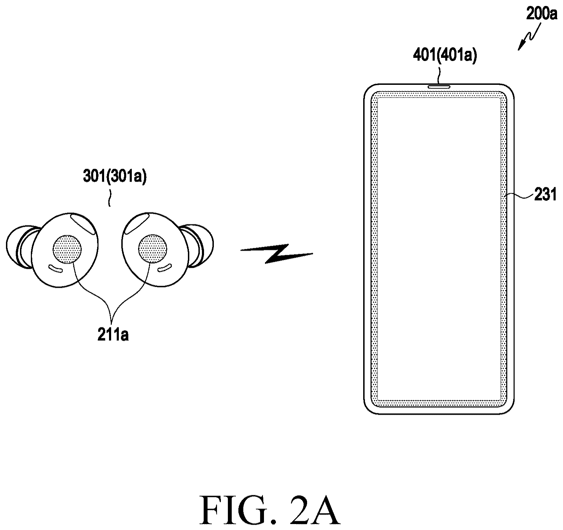

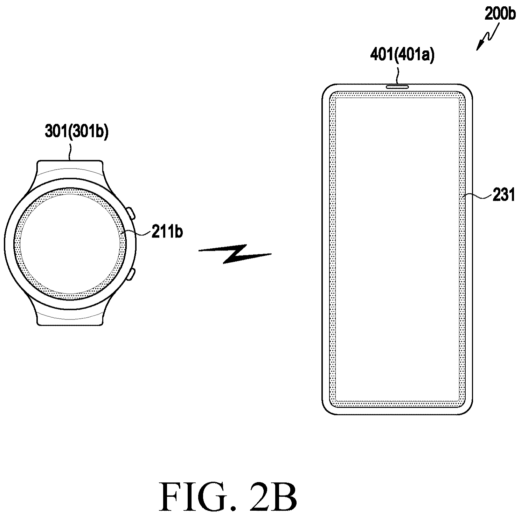

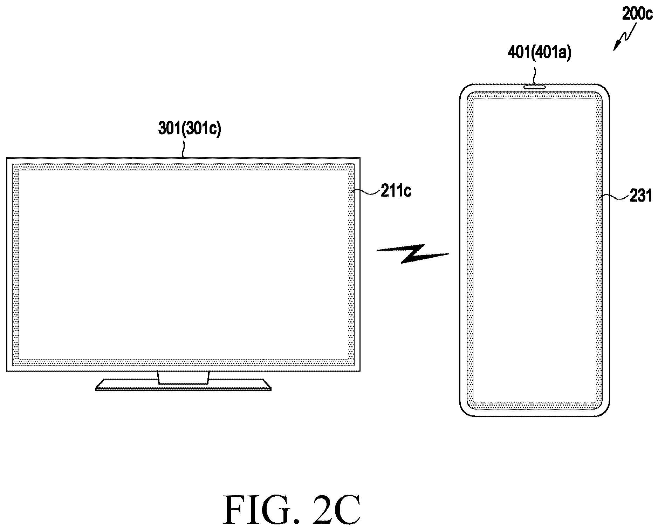

FIGS. 2A, 2B, and 2C are diagrams 200a to 200c illustrating a system for identifying an external electronic device connected to an electronic device.

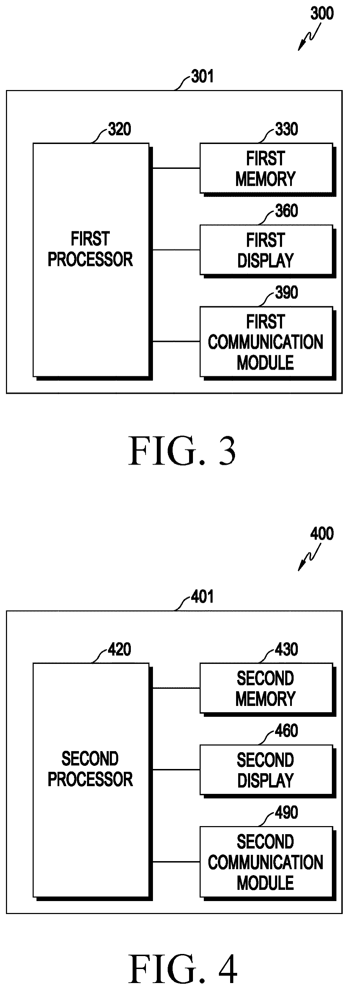

As illustrated in FIGS. 2A to 2C, an electronic device 301 is a device connected to an external electronic device 401 and capable of sharing information, and may include, for example, ear buds, a smart watch, and/or a smart TV. In FIGS. 2A to 2C, ear buds 301a, a smart watch 301b, and/or a smart TV 301c are described as examples of the electronic device 301, but the disclosure is not limited thereto and may include all devices connected to the external electronic device 401 and capable of information. The configuration of the electronic device 301 may be described in detail with reference to FIG. 3 below.

The external electronic device 401 is a device connected to the electronic device 301 and capable of sharing information and may include a smartphone 401a, a smart TV, and/or a tablet PC. In FIGS. 2A to 2C, the smartphone 401a, the smart TV, and/or the tablet PC are described as examples of the external electronic device 401, but the disclosure is not limited thereto and may include all devices connected to the electronic device 301 and capable of sharing information. The configuration of the external electronic device 401 may be described in detail with reference to FIG. 4 below.

As illustrated in FIG. 2A, according to an embodiment, when the ear buds 301a completes the connection to the smartphone 401a, the ear buds 301a may display a first color for identifying the smartphone 401a in partial areas 211a of the ear buds 301a in order to inform that the smartphone 401a is currently connected to the ear buds 301a.

According to an embodiment, the ear buds 301a may identify first color information for identifying the smartphone 401a included in account information of the smartphone 401a received from an account server.

According to an embodiment, when the smartphone 401a completes the connection to the ear buds 301a, the smartphone 401a may display first color information for identifying the smartphone 401a in partial areas 231 of the smartphone 401a (for example, partial areas of the display of the smartphone).

As illustrated in FIG. 2B, according to an embodiment, when the smart watch 301b completes the connection to the smartphone 401a, the smart watch 301b may display a first color for identifying the smartphone 401a in partial areas 211b of the smart watch 301b (for example, partial areas of the display) in order to inform that the smartphone 401a is currently connected to the smart watch 301b.

According to an embodiment, the smart watch 301b may identify first color information for identifying the smartphone 401a included in account information of the smartphone 401a received from the account server.

According to an embodiment, when the connection to the smart watch 301b is completed, the smartphone 401a may display first color information for identifying the smartphone 401a in the partial areas 231 of the smartphone 401a (for example, partial areas of the display of the smartphone).

As illustrated in FIG. 2C, according to an embodiment, when the smart TV 301c completes the connection to the smartphone 401a, the smart TV 301c may display the first color 211 for identifying the smartphone 401a in partial areas 211c of the smart TV 301c (for example, partial areas of the display) in order to inform that the smartphone 401a is currently connected to the smart TV 301c.

According to an embodiment, the smart TV 301c may identify first color information for identifying the smartphone 401a included in account information of the smartphone 401a received from the account server.

According to an embodiment, when the connection to the smart TV 301c is completed, the smartphone 401a may display first color information for identifying the smartphone 401a in the partial areas 231 of the smartphone 401a (for example, partial areas of the display of the smartphone).

FIG. 3 is a block diagram 300 of an electronic device according to an embodiment.

Referring to FIG. 3, according to an embodiment, the electronic device 301 may include a first processor 320, first memory 330, a first display 360, and a first communication module 390.

At least some of the components of the electronic device 301 illustrated in FIG. 3 may be the same as or similar to the components of the electronic device 101 in FIG. 1, and hereinafter, overlapping description is omitted.

According to an embodiment, the first processor 320 may be substantially the same as or similar to the processor 120 of FIG. 1.

According to an embodiment, when the electronic device 301 completes the connection to an external electronic device (for example, a first external electronic device) (for example, the external electronic device 401 of FIGS. 2A to 2C), the first processor 320 may display a color (for example, a first color) for identifying the external electronic device in partial areas of the electronic device in order to inform that the external electronic device is connected to the electronic device 301 (for example, the electronic device 301 of FIGS. 2A to 2C).

According to an embodiment, when identifying reception of connection request information from the external electronic device through the first communication module 390, the first processor 320 may identify whether another external electronic device (for example, a second external electronic device) is connected to the electronic device 301.

According to an embodiment, when identifying that the other external electronic device is not connected to the electronic device 301, the first processor 320 may make a request for account information of the external electronic device to the account server, based on identification information of the external electronic device included in the connection request information from the external electronic device. The first processor 320 may identify color information (for example, first color information) for identifying the external electronic device in account information of the external electronic device received from the account server and display a color (for example, the first color) corresponding to the color information (for example, the first color information) for identifying the external electronic device in partial areas of the electronic device.

According to an embodiment, the first processor 320 may maintain displaying of the color (for example, the first color) for identifying the external electronic device while the electronic device 301 is connected to the external electronic device.

According to an embodiment, when a predetermined time passes while the color (for example, the first color) for identifying the external electronic device is displayed in partial areas of the electronic device, the first processor 320 may release displaying of the color (for example, the first color) for identifying the external electronic device.

According to an embodiment, when a user's selection is performed or a battery of the electronic device 301 is equal to or lower than a threshold, the first processor 320 may release displaying of the color (for example, the first color) for identifying the external electronic device.

According to an embodiment, in the case of the initial connection of the external electronic device, the first processor 320 may display the color (for example, the first color) for identifying the external electronic device to make the color flicker in partial areas of the electronic device while a pairing operation with the external electronic device is performed, and when the pairing operation is completed and the connection to the external electronic device is completed, may release flickering of the color (for example, the first color) for identifying the external electronic device and maintain displaying of the color (for example, the first color) for identifying the external electronic device in partial areas of the electronic device.

According to an embodiment, the first processor 320 may receive color information (for example, first color information) for identifying the external electronic device from the external electronic device while the pairing operation with the external electronic device is performed.

According to an embodiment, the first processor 320 may receive color information (for example, first color information) for identifying the external electronic device from the external electronic device after the connection to the external electronic device is completed.

According to an embodiment, the first processor 320 may display color information (for example, first color information) for identifying the external electronic device in partial areas of the electronic device, for example, partial areas of the display 260.

According to an embodiment, when it is identified that the other external electronic device is connected to the electronic device 301, the first processor 320 may display a color (for example, a second color) for identifying the other external electronic device in partial areas of the electronic device in order to inform that the other external electronic device is connected to the electronic device 301.

According to an embodiment, when it is identified that the other external electronic device is connected to the electronic device 301, the first processor 320 may inform the other external electronic device of reception of a connection request from the external electronic device, and when the electronic device receives information indicating agreement of the connection to the external electronic device from the other external electronic device, may release the connection to the other external electronic device.

According to an embodiment, when it is identified that the other external electronic device is connected to the electronic device 301, the first processor 320 may transmit connection state information informing of the connection to the other external electronic device to the external electronic device.

According to an embodiment, when receiving a connection request from the electronic device after transmitting the connection state information informing of the connection to the other external electronic device, the first processor 320 may inform the other external electronic device of reception of the connection request from the external electronic device and, when the electronic device receives agreement of the connection to the external electronic device from the other external electronic device, release the connection to the other external electronic device.

According to an embodiment, when completing the connection to the external electronic device after releasing the connection to the other external electronic device, the first processor 320 may display the color (for example, the first color) for identifying the external electronic device in partial areas of the electronic device 301.

According to an embodiment, the first memory 330 may be implemented to be substantially the same as or similar to the memory 130 of FIG. 1.

According to an embodiment, color information (for example, first color information) for identifying the external electronic device (for example, the first external electronic device) and/or color information (for example, second color information) for identifying another external electronic device (for example, the second external electronic device) may be stored in the first memory 330.

According to an embodiment, the first display 360 may be implemented to be substantially the same as or similar to the display module 160 of FIG. 1.

According to an embodiment, the color (for example, the first color) for identifying the external electronic device may be displayed in partial areas of the first display 360 in order to inform that the external electronic device is connected to the electronic device 301.

According to an embodiment, the first communication module 390 may be implemented to be substantially the same as or similar to the communication module 190 of FIG. 1 and may include a plurality of communication circuits using different communication technologies.

According to an embodiment, the first communication module 390 may include at least one of a wireless LAN module (not shown) and a short-range communication module (not shown), and the short-range communication module (not shown) may include a ultra-wideband (UWB) communication module, a Wi-Fi communication module, an NFC communication module, a Bluetooth legacy communication module, and/or a BLE communication module.

According to an embodiment, through a short-range communication module (not shown) of the first communication module 390, short-range communication with an external electronic device (for example, the first external electronic device and/or the second external electronic device) (for example, the external electronic device 401 of FIGS. 2A to 2C) located on the periphery thereof may be connected.

FIG. 4 is a block diagram 400 of an external electronic device according to an embodiment.

Referring to FIG. 4, according to an embodiment, the external electronic device 401 may include a second processor 420, second memory 430, a second display 460, and a second communication module 490.

At least some of the components of the external electronic device 401 illustrated in FIG. 4 may be the same as similar to the components of the electronic device 101 in FIG. 1 and, hereinafter, overlapping description is omitted.

According to an embodiment, the components of the external electronic device 401 illustrated in FIG. 4 may be the same as or similar to the components of the external electronic device (for example, the first external electronic device) and/or another external electronic device (for example, the second external electronic device).

According to an embodiment, the second processor 420 may be substantially the same as or similar to the processor 120 of FIG. 1.

According to an embodiment, the second processor 420 may access an account server and store color information (for example, first color information) for identifying an external electronic device selected by the user as account information of the external electronic device.

According to an embodiment, the second processor 420 may provide a color selection option through which the user can select a color for identifying the external electronic device during an account information registration process.

According to an embodiment, the second processor 420 may provide a predicted image in which color information (for example, first color information) for identifying the external electronic device selected by the user is displayed in partial areas of the electronic device (for example, the electronic device 301 of FIGS. 2A to 2C and/or the electronic device 301 of FIG. 3) connected to the external electronic device during the account information registration process.

According to an embodiment, the second processor 420 may display at least one color and/or device information for identifying at least one device located on the periphery thereof during the account information registration process.

According to an embodiment, when the connection to the electronic device (for example, the electronic device 301 of FIGS. 2A to 2C and/or the electronic device 301 of FIG. 3) is completed, the second processor 420 may display a color (for example, a first color) for identifying the external electronic device in partial areas of the external electronic device 401 (for example, the external electronic device of FIGS. 2A to 2C) while the color (for example, the first color) for identifying the external electronic device is displayed in partial areas of the electronic device.

According to an embodiment, the second processor 420 may search for at least one connectable electronic device on the peripheral thereof based on a user's request and transmit connection request information to an electronic device (for example, the electronic device 301 of FIGS. 2A to 2C and/or the electronic device 301 of FIG. 3) selected by the user from among at least one found electronic device.

According to an embodiment, when the connection to the electronic device is completed through the communication module 490, the second processor 420 may display the color (for example, the first color) for identifying the external electronic device in partial areas of the external electronic device 401 and, when a predetermined time passes, release displaying of the color (for example, the first color) for identifying the external electronic device.

According to an embodiment, the second processor 420 may maintain displaying of the color (for example, the first color) for identifying the external electronic device in partial areas of the external electronic device while the connection to the electronic device is made.

According to an embodiment, the second processor 420 may receive connection state information informing that another external electronic device (for example, the second external electronic device) has been already connected to the electronic device from the electronic device in response to the connection request. The second processor 420 may inform the user that the other external electronic device is connected to the electronic device by using color information (for example, second color information) for identifying the other external electronic device included in the connection state information.

According to an embodiment, when receiving the request for the connection to the electronic device, based on a user's selection, while informing that the other external electronic device is connected to the electronic device by using color information (for example, second color information) for identifying the other external electronic device, the second processor 420 may transmit connection request information to the electronic device.

According to an embodiment, the second processor 420 may transmit color information (for example, first color information) for identifying the external electronic device to the electronic device while a pairing operation with the electronic device is performed.

According to an embodiment, after completing the connection to the electronic device, the second processor 420 may transmit color information (for example, first color information) for identifying the external electronic device to the electronic device.

According to an embodiment, the second memory 430 may be implemented to be substantially the same as or similar to the memory 130 of FIG. 1.

According to an embodiment, the color information (for example, the first color information) for identifying the external electronic device may be stored in the second memory 430.

According to an embodiment, the second display 460 may be implemented to be substantially the same as or similar to the display module 160 of FIG. 1.

According to an embodiment, a color (for example, the first color) for identifying the external electronic device may be displayed in partial areas of the second display 460.

According to an embodiment, an image of the electronic device that displays the color for identifying the other external electronic device in partial areas of the electronic device may be displayed on the second display 460 in order to inform that the other external electronic device connected to the electronic device.

According to an embodiment, the second communication module 490 may be implemented to be substantially the same as or similar to the communication module 190 of FIG. 1 and may include a plurality of communication circuits using different communication technologies.

According to an embodiment, the second communication module 490 may include at least one of a wireless LAN module (not shown) and a short-range communication module (not shown), and the short-range communication module (not shown) may include a ultra-wideband (UWB) communication module, a Wi-Fi communication module, an NFC communication module, a Bluetooth legacy communication module, and/or a BLE communication module.

According to an embodiment, through a short-range communication module (not shown) of the second communication module 490, the connection to an electronic device (for example, the electronic device 301 of FIGS. 2A to 2C and/or the electronic device 301 of FIG. 3) located on the peripheral may be made.

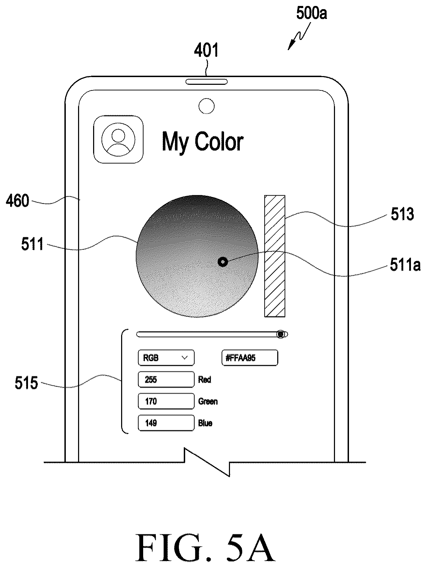

FIGS. 5A to 5C are diagrams 500a to 500c illustrating an operation of registering a color in an external electronic device according to an embodiment.

Referring to FIG. 5A, the external electronic device 401 (for example, the external electronic device 401 of FIGS. 2A to 2C and/or the external electronic device 401 of FIG. 4) may access an account server and provide a color selection option through which the user can select a color for identifying the external electronic device during a process of registering account information of the external electronic device in the account server or a process of adding color information to the account information of the external electronic device stored in the account server.

The external electronic device 410 may display a color selection UI through which the user can select a color in a first area 511 on the display 460 (for example, the second display 460 of FIG. 4) of the external electronic device 401, based on a user's selection for the color selection option, display a color 511a selected by the user in the color selection UI in a second area 513, and display information (for example, R, G, and B values) on the color selected by the user in a third area 515.

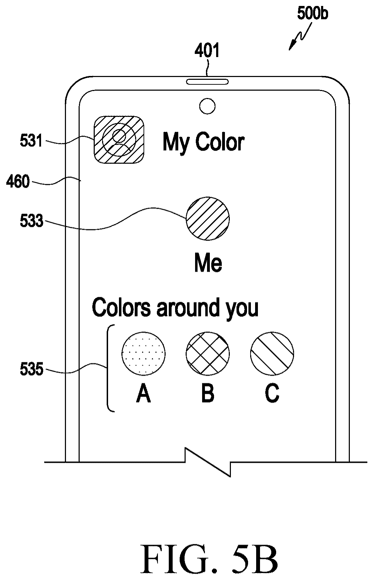

Referring to FIG. 5B, when identifying a selection of a color identification option through which a color for identifying the external electronic device can be identified after completely registering color information for identifying the external electronic device, the external electronic device 401 (for example, the external electronic device 401 of FIGS. 2A to 2C and/or the external electronic device 401 of FIG. 4) may change a color of an icon 531 indicating account information of the external electronic device displayed on the display 460 (for example, the second display 460 of FIG. 4) of the external electronic device 410 into the color for identifying the external electronic device and display the icon. The external electronic device 401 may display the color for identifying the external electronic device selected by the user in the first area 533 on the display 460 of the external electronic device 401 and display a color and/or device information (for example, a user's name (A, B, and C) registered in the device and/or a device name) for identifying at least one device located around the external electronic device in the second area 535).

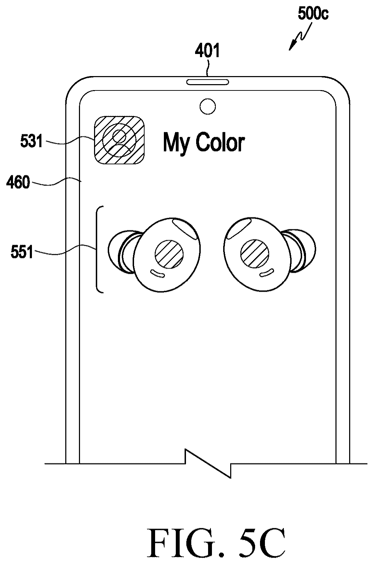

Referring to FIG. 5C, when a selection of a predicted image option for providing an image displaying a color for identifying the external electronic device is identified in the electronic device connected to the external electronic device after completely registering color information for identifying the external electronic device, the external electronic device 401 (for example, the external electronic device 401 of FIGS. 2A to 2C and/or the external electronic device 401 of FIG. 4) may provide a predicted image 551 in which the color for identifying the external electronic device is displayed in partial areas of the electronic device connected to the external electronic device on the display 460 (for example, the second display 460 of FIG. 4) of the external electronic device 401.

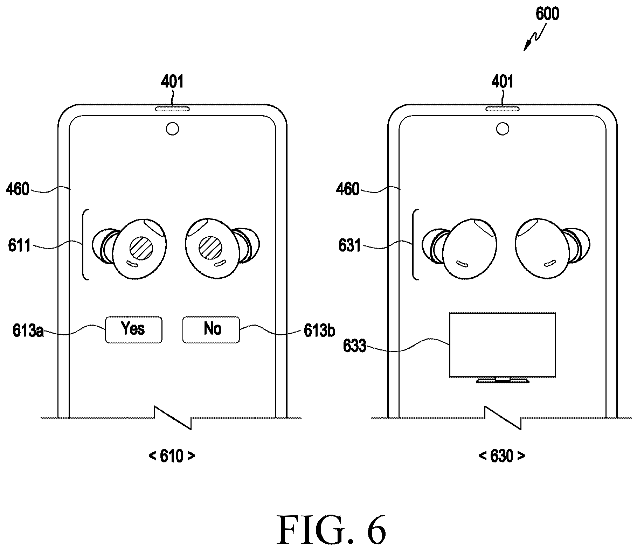

FIG. 6 is a diagram 600 illustrating an operation in which an external electronic device searches for connectable electronic devices according to an embodiment.

Referring to FIG. 6, as illustrated in a screen <610>, when the external electronic device 401 (for example, the external electronic device 401 of FIGS. 2A to 2C and/or the external electronic device 401 of FIG. 4) searches for at least one connectable electronic device on the peripheral thereof based on a user's request and a user's selection for the electronic device (for example, the electronic device 301 of FIGS. 2A to 2C and/or the electronic device 301 of FIG. 3) from among at least one found electronic device is identified, the external electronic device 401 may display, on the display 460 (for example, the second display 460 of FIG. 4) of the external electronic device 401, an image 611 of an electronic device in which a color for identifying the external electronic device in partial areas, a first button 613a that agrees with the connection to the electronic device, and a second button 613b that does not agree with the connection to the electronic device.

When identifying a selection of the first button 613a that agrees with the connection to the electronic device, the external electronic device 401 may transmit connection request information to the electronic device. When identifying a selection of the second button 613b that does not agree with the connection to the electronic device, the external electronic device 401 may display, the display 460 of the external electronic, an image of at least one other electronic device capable of being connected device 401 as shown in a screen <630>. Although the screen <630> according to an embodiment illustrates an example of displaying an image of at least one other electronic device which can be connected to the display 460 as an image 631 of ear buds and an image 633 of a smart TV, the disclosure is not limited thereto and the image of at least one other electronic device which can be connected to the display 460 may include an image (for example, an image of a smart watch and/or an image of another electronic device) of one or more other electronic devices connected to the external electronic device 401 and capable of sharing information.

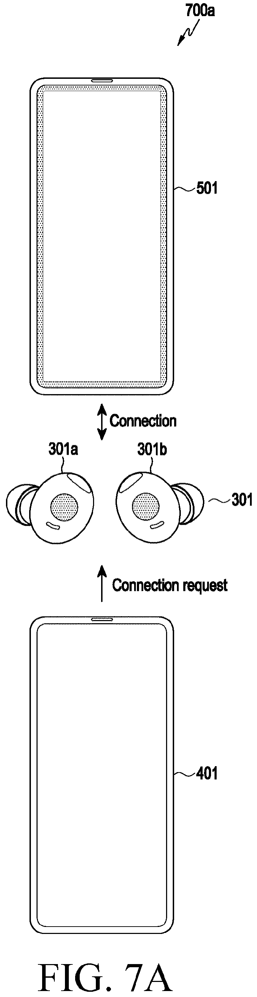

FIGS. 7A to 7B are diagrams 700a to 700b illustrating an operation of displaying a color for identifying an external electronic device in an electronic device according to an embodiment.

Referring to FIG. 7A, when the first external electronic device 401 (for example, the external electronic device 401 of FIGS. 2A to 2C and/or the external electronic device 401 of FIG. 4) transmits connection request information to the electronic device 301 (for example, the electronic device 301 of FIGS. 2A to 2C and/or the electronic device 301 of FIG. 3), the electronic device 301 may identify that the second external electronic device 501 is connected to the electronic device and display a second color for identifying the second external electronic device in partial areas 301a and 301b of the electronic device 301.

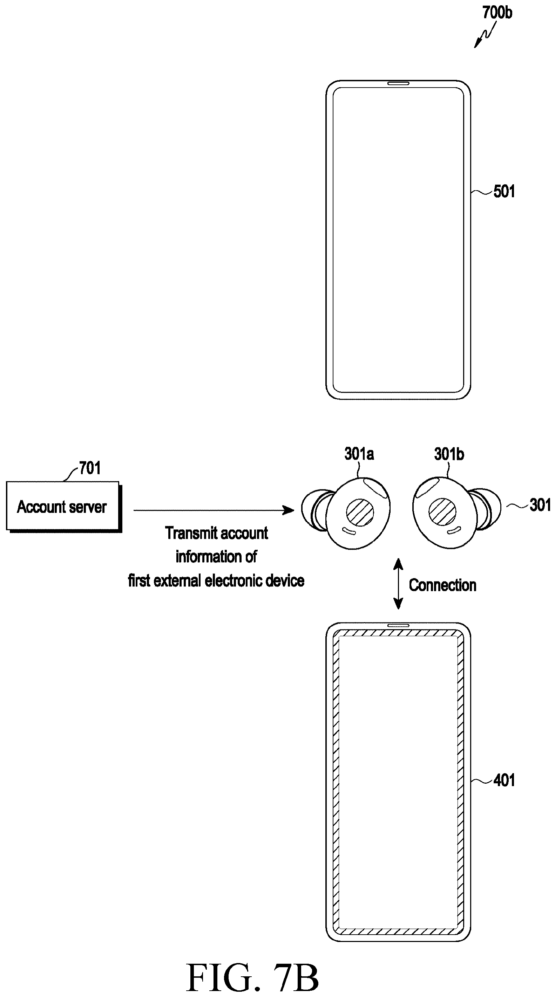

Referring to FIG. 7B, the electronic device 301 may inform the second external electronic device 501 connected to the electronic device of reception of the connection request information from the first external electronic device 401 and, when the electronic device identifies information indicating agreement of the connection to the first external electronic device from the second external electronic device 501, release the connection to the second external electronic device 501 and perform an operation of the connection to the first external electronic device 401.

The electronic device 301 may make a request for account information of the first external electronic device to an account server 701 and identify first color information for identifying the first external electronic device in the account information of the first external electronic device received from the account server 701. When completing the connection to the first external electronic device 401, the electronic device 301 may display a first color corresponding to the first color information for identifying the first external electronic device in the partial areas 301a and 301b of the electronic device 301.

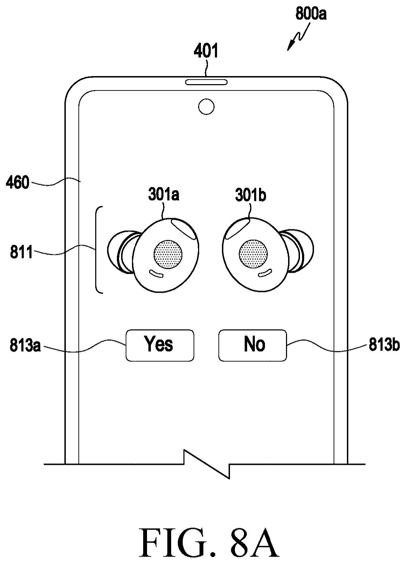

FIGS. 8A to 8C are diagrams 800a to 800c illustrating an operation of an external electronic device to be connected with an electronic device according to an embodiment.

Referring to FIG. 8A, the first external electronic device (for example, the external electronic device of FIGS. 2A to 2C, the external electronic device 401 of FIG. 4, and/or the first external electronic device 401 of FIGS. 7A and 7B) may transmit a connection request to the electronic device (for example, the electronic device 301 of FIGS. 2A to 2C, the electronic device 310 of FIG. 3, and/or the electronic device 301 of FIGS. 7A and 7B) and receive connection state information informing that the second external electronic device (for example, the second external electronic device 501 of FIGS. 7A and 7B) has been already connected to the electronic device from the electronic device in response to the connection request. The first external electronic device 401 may display an image 811 of the electronic device in which a second color for identifying the second external electronic device is displayed in the partial areas 301a and 301b, a first button 813a that agrees with the connection to the electronic device, and a second button 813b that does not agree with the connection to the electronic device on the display 460 (for example, the second display 460 of FIG. 4) of the first external electronic device by using color information (for example, second color information) for identifying the second external electronic device included in the connection state information. When identifying a selection of the first button 813a that agrees with the connection to the electronic device, the first external electronic device 401 may transmit connection request information to the electronic device.

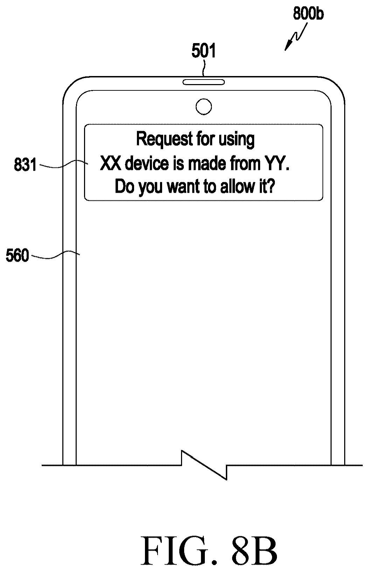

Referring to FIG. 8B, when receiving information indicating that the first external electronic device 401 is making a request for the connection to the electronic device from the currently connected electronic device, the second external electronic device (for example, the second external electronic device 501 of FIGS. 7A and 7B) may inform that the first external electronic device 401 (for example, XX) is making a request for the connection to the electronic device (for example, YY) on the display 560 of the second external electronic device and display a popup window 831 that inquires about whether the electronic device agrees with the connection to the first external electronic device. When identifying that the electronic device agrees with the connection to the first external electronic device, based on a selection of the user of the second external electronic device 501, the second electronic device may transmit information indicating the agreement of the connection to the first external electronic device to the first external electronic device 401 and release the connection to the electronic device.

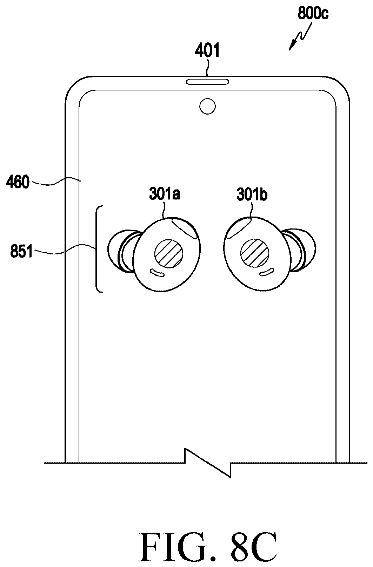

Referring to FIG. 8C, when completing the connection to the electronic device in response to the connection request, the first external electronic device may display an image 851 of the electronic device in which a first color for identifying the first external electronic device is displayed in the partial areas 301a and 301b on the display 460 of the first external electronic device in order to inform that the first color for identifying the first external electronic device is displayed in partial areas of the electronic device.

The electronic device 101 of FIG. 1, 301 of FIGS. 2A to 2C, or 301 of FIG. 3 according to an embodiment may include the communication module 190 of FIG. 1 or 390 of FIG. 3 and the processor 120 of FIG. 1 or 320 of FIG. 3.

When identifying reception of the connection request from the first external electronic device (for example, 401 of FIGS. 2A to 2C or 401 of FIG. 4) through the communication module, the processor 120 of FIG. 1 or 320 of FIG. 3 according to an embodiment may be configured to identify whether the second external electronic device is connected to the electronic device.

When identifying that the second external electronic device 501 of FIGS. 7A to 7C is not connected to the electronic device, the processor 120 of FIG. 1 or 320 of FIG. 3 may be configured to complete the connection to the first external electronic device.

When completing the connection to the first external electronic device, the processor 120 of FIG. 1 or 320 of FIG. 3 according to an embodiment may be configured to display the first color for identifying the first external electronic device in partial areas of the electronic device in order to inform that the first external electronic device is connected to the electronic device.

The processor 120 of FIG. 1 or 320 of FIG. 3 according to an embodiment may be configured to identify first color information for identifying the first external electronic device in account information of the first external electronic device.

The processor 120 of FIG. 1 or 320 of FIG. 3 according to an embodiment may be configured to perform displaying such that the first color flickers in partial areas of the electronic device while a pairing operation for the connection to the first external electronic device is performed.

When completing the connection to the first external electronic device after completing the paring operation, the processor 120 of FIG. 1 or 320 of FIG. 3 according to an embodiment may be configured to release flickering of the first color and maintain displaying of the first color.

When identifying that the second external electronic device is connected to the electronic device, the processor 120 of FIG. 1 or 320 of FIG. 3 according to an embodiment may be configured to display the second color for identifying the second external electronic device in partial areas of the electronic device in order to inform that the second external electronic device is connected to the electronic device.

When identifying release of the connection to the second external electronic device, the processor 120 of FIG. 1 or 320 of FIG. 3 according to an embodiment may be configured to complete the connection to the first external electronic device through the communication module.

When completing the connection to the first external electronic device, the processor 120 of FIG. 1 or 320 of FIG. 3 according to an embodiment may be configured to display the first color for identifying the first external electronic device in partial areas of the electronic device in order to display that the first external electronic device is connected to the electronic device.

The processor 120 of FIG. 1 or 320 of FIG. 3 according to an embodiment may be configured to inform the second external electronic device connected to the electronic device of reception of a connection request received from the first external electronic device.

When the electronic device identifies agreement of the connection to the first external electronic device from the second external electronic device, the processor 120 of FIG. 1 or 320 of FIG. 3 according to an embodiment may be configured to release the connection to the second external electronic device.

A system for identifying an external electronic device connected to an electronic device according to an embodiment may include the electronic device 101 of FIG. 1, 301 of FIGS. 2A to 2C, or 301 of FIG. 3 configured to, when it is identified that a second external electronic device is not connected to the electronic device according to a connection request of the first external electronic device, complete the connection to the first external electronic device and, when the connection to the first external electronic device is completed, display a first color identifying the first external electronic device in partial areas of the electronic device in order to inform that the first external electronic device is connected to the electronic device.

The system according to an embodiment may include the first external electronic device (for example, 401 of FIGS. 2A to 2C or 301 of FIG. 4) configured to make a request for the connection to the electronic device and, when the connection to the electronic device is completed, display the first color in the partial area of the first external electronic device.

When identifying that the second external electronic device is connected to the electronic device, the electronic device 101 of FIG. 1, 301 of FIGS. 2A to 2C, or 301 of FIG. 3) of the system according to an embodiment may be configured to transmit connection state information informing of the connection to the second external electronic device to the first external electronic device.

When receiving the connection state information from the electronic device, the first external electronic device 401 of FIGS. 2A to 2C or 301 of FIG. 4) of the system according to an embodiment may be configured to inform that the second external electronic device is connected to the electronic device by using second color information for identifying the second external electronic device included in the connection state information.

When receiving the request for the connection to the electronic device while informing that the second external electronic device is connected to the electronic device by using the second color information for identifying the second external electronic device, the first external electronic device 401 of FIGS. 2A to 2C or 301 of FIG. 4) of the system according to an embodiment may be configured to transmit the connection request to the electronic device.

When completing the connection to the electronic device, the first external electronic device 401 of FIGS. 2A to 2C or 301 of FIG. 4) of the system according to an embodiment may be configured to inform of the completion of the connection to the electronic device by using the first color for identifying the first external electronic device.

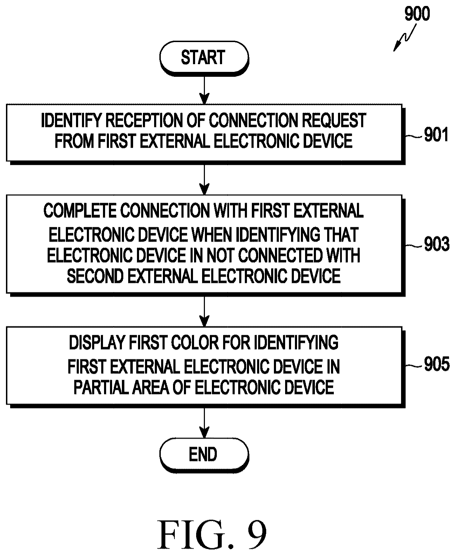

FIG. 9 is a flowchart 900 illustrating an operation in which an electronic device identifies an external electronic device connected to the electronic device according to an embodiment. Operations for identifying the external electronic device connected to the electronic device may include operations 901 to 905. In the following embodiment, respective operations may be sequentially performed, but the sequential performance is not necessary. For example, the order of each operation may be changed, at least two operations may be performed in parallel, or other operations may be added.

In operation 901, an electronic device (for example, the electronic device 101 of FIG. 1, the electronic device 301 of FIGS. 2A to 2C, and/or the electronic device 301 of FIG. 3) may identify reception of a connection request from a first external electronic device (for example, the external electronic device 401 of FIGS. 2A to 2C, the electronic device 401 of FIG. 4, and/or the first external electronic device 401 of FIGS. 7A to 7B).

According to an embodiment, the electronic device may identify connection request information received from the first external electronic device through a communication module (for example, the first communication module 390 of FIG. 3) of the electronic device.

In operation 903, when identifying that the electronic device (for example, the electronic device 101 of FIG. 1, the electronic device 301 of FIGS. 2A to 2C, and/or the electronic device 301 of FIG. 3) is not connected to a second external electronic device (for example, the second external electronic device 501 of FIGS. 7A to 7B), the electronic device may complete the connection to the first external electronic device.

In operation 905, the electronic device (for example, the electronic device 101 of FIG. 1, the electronic device 301 of FIGS. 2A to 2C, and/or the electronic device 301 of FIG. 3) may display a first color for identifying the first external electronic device in partial areas of the electronic device.

According to an embodiment, the electronic device may make a request for account information of the first external electronic device to an account server, based on identification information of the first external electronic device included in connection request information from the first external electronic device, identify first color information for identifying the external electronic device in the account information of the first external electronic device received from the account server, and display a first color corresponding to the first color information for identifying the external electronic device in partial areas of the electronic device.

According to an embodiment, the electronic device may maintain displaying of the first color for identifying the first external electronic device while the electronic device is connected with the first external electronic device.

According to an embodiment, when a predetermined time passes while the first color identifying the external electronic device in partial areas of the electronic device, the electronic device may release displaying of the first color for identifying the first external electronic device.

According to an embodiment, when a user's selection is performed or a battery of the electronic device is equal to or lower than a threshold, the electronic device may release displaying of the first color for identifying the first external electronic device.

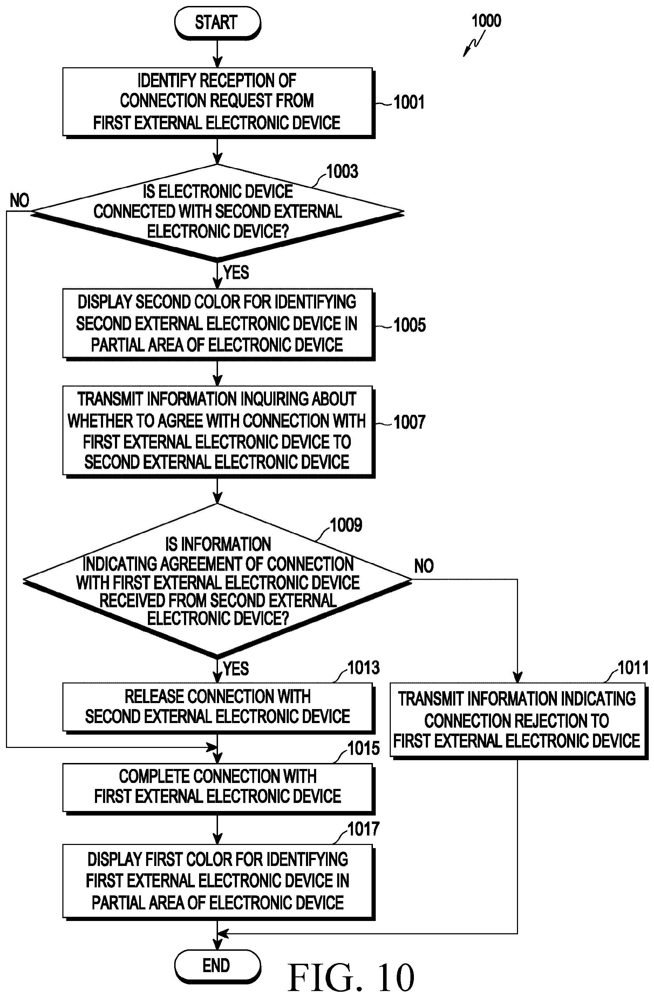

FIG. 10 is a flowchart 1000 illustrating an operation in which an electronic device identifies an external electronic device connected to the electronic device according to an embodiment. Operations for identifying the external electronic device connected to the electronic device may include operations 1001 to 1017. In the following embodiment, respective operations may be sequentially performed, but the sequential performance is not necessary. For example, the order of each operation may be changed, at least two operations may be performed in parallel, or other operations may be added.

In operation 1001, an electronic device (for example, the electronic device 101 of FIG. 1, the electronic device 301 of FIGS. 2A to 2C, and/or the electronic device 301 of FIG. 3) may identify reception of a connection request from a first external electronic device (for example, the external electronic device 401 of FIGS. 2A to 2C, the electronic device 401 of FIG. 4, and/or the first external electronic device 401 of FIGS. 7A to 7B).

According to an embodiment, the electronic device may identify connection request information received from the first external electronic device through a communication module (for example, the first communication module 390 of FIG. 1) of the electronic device.

In operation 1003, the electronic device (for example, the electronic device 101 of FIG. 1, the electronic device 301 of FIGS. 2A to 2C, and/or the electronic device 301 of FIG. 3) may identify whether the electronic device is connected with a second external electronic device (for example, the second external electronic device 501 of FIGS. 7A to 7B).

When identifying that the electronic device is connected to the second external electronic device in operation 1003, the electronic device may display a second color for identifying a second external electronic device in partial areas of the electronic device in operation 1005.

According to an embodiment, when making the connection to the second external electronic device, the electronic device may store second color information for identifying the second external electronic device identified in account information of the second external electronic device stored in an account server in memory (for example, the first memory 230 of FIG. 3) of the electronic device.

According to an embodiment, when receiving a connection request from the first external electronic device in the state where the electronic device is connected with the second external electronic device, the electronic device may detect second color information for identifying the second external electronic device in the memory and display a second color corresponding to the second color information in partial areas of the electronic device in order to inform that the electronic device is currently connected with the second external electronic device.

In operation 1007, the electronic device (for example, the electronic device 101 of FIG. 1, the electronic device 301 of FIGS. 2A to 2C, and/or the electronic device 301 of FIG. 3) may transmit information that inquires about whether to agree with the connection to the first external electronic device to the second external electronic device.

According to an embodiment, the electronic device may inform the currently connected second external electronic device of reception of the connection request information from the first external electronic device and transmit information that inquires about whether to agree with the connection to the first external electronic device.

In operation 1009, the electronic device (for example, the electronic device 101 of FIG. 1, the electronic device 301 of FIGS. 2A to 2C, and/or the electronic device 301 of FIG. 3) may identify whether information indicating the agreement of the connection to the first external electronic device from the second external electronic device.

When receiving information indicating disagreement of the connection to the first external electronic device from the second external electronic device in operation 1009, the electronic device may transmit information indicating connection reject to the first external electronic device in operation 1011.

When receiving information indicating agreement of the connection to the first external electronic device from the second external electronic device in operation 1009, the electronic device may release the connection to the second external electronic device in operation 1013.

In operation 1015, the electronic device (for example, the electronic device 101 of FIG. 1, the electronic device 301 of FIGS. 2A to 2C, and/or the electronic device 301 of FIG. 3) may complete the connection to the first external electronic device.

In operation 1017, the electronic device (for example, the electronic device 101 of FIG. 1, the electronic device 301 of FIGS. 2A to 2C, and/or the electronic device 301 of FIG. 3) may display a first color for identifying the first external electronic device in partial areas of the electronic device.

According to an embodiment, the electronic device may make a request for account information of the first external electronic device to an account server, based on identification information of the first external electronic device included in connection request information from the first external electronic device, identify first color information for identifying the external electronic device in the account information of the first external electronic device received from the account server, and display a first color corresponding to the first color information for identifying the external electronic device in partial areas of eth electronic device.

According to an embodiment, the electronic device may maintain displaying of the first color for identifying the first external electronic device while the electronic device is connected with the first external electronic device.

According to an embodiment, when a predetermined time passes while the first color identifying the external electronic device in partial areas of the electronic device, the electronic device may release displaying of the first color for identifying the first external electronic device.

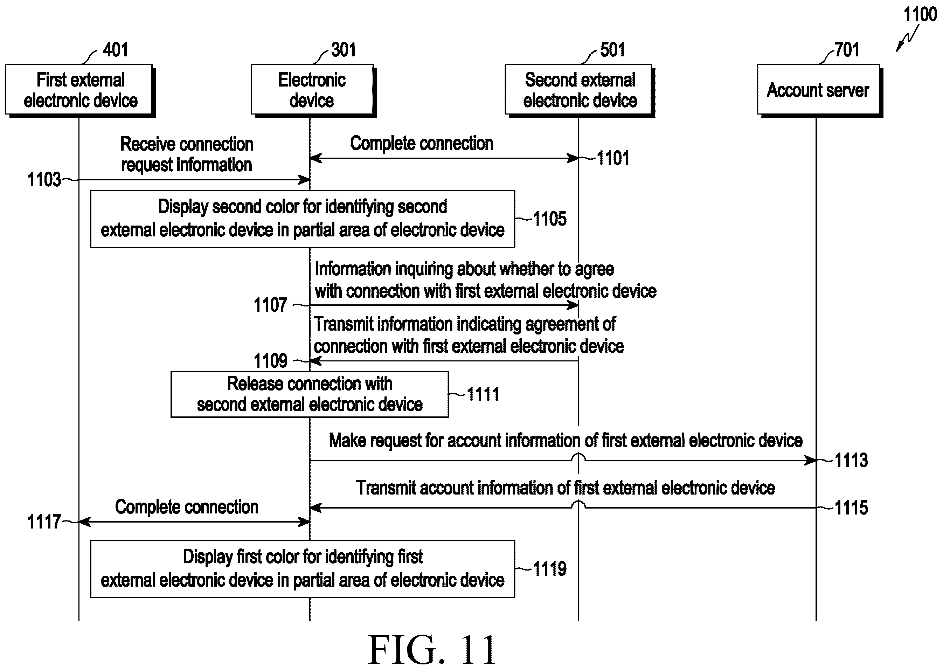

FIG. 11 is a flowchart 1100 illustrating an operation of identifying an external electronic device connected with an electronic device according to an embodiment. Operations for identifying the external electronic device connected to the electronic device may include operations 1101 to 1119. In the following embodiment, respective operations may be sequentially performed, but the sequential performance is not necessary. For example, the order of each operation may be changed, at least two operations may be performed in parallel, or other operations may be added.

In operation 1101, the electronic device 301 (for example, the electronic device 101 of FIG. 1, the electronic device 301 of FIGS. 2A to 2C, and/or the electronic device 301 of FIG. 3) may identify a connection completion state with a second external electronic device.

According to an embodiment, the electronic device 301 may identify that the electronic device has been completely connected with the second external electronic device 501 through a communication module (for example, the first communication module 390 of FIG. 3) of the electronic device.

In operation 1103, the first external electronic device 401 (for example, the first external electronic device 401 of FIGS. 2A to 2C, the first external electronic device 401 of FIG. 4, and/or the first external electronic device 401 of FIGS. 7A to 7B) may transmit connection request information to the electronic device 301.

In operation 1105, the electronic device 301 (for example, the electronic device 101 of FIG. 1, the electronic device 301 of FIGS. 2A to 2C, and/or the electronic device 301 of FIG. 3) may display a second color for identifying a second external electronic device in partial areas of the electronic device.

According to an embodiment, when receiving the connection request from the first external electronic device, the electronic device 301 may identify second color information for identifying the second external electronic device in memory (for example, the first memory 330 of FIG. 4) of the electronic device and display the second color in partial areas of the electronic device in order to inform that the electronic device is currently connected with the second external electronic device 501.

In operation 1107, the electronic device 301 (for example, the electronic device 101 of FIG. 1, the electronic device 301 of FIGS. 2A to 2C, and/or the electronic device 301 of FIG. 3) may transmit information that inquires about whether to agree with the connection to the first external electronic device to the second external electronic device 501.

According to an embodiment, the electronic device 301 may inform the currently connected second external electronic device 501 of reception of connection request information from the first external electronic device, and the electronic device 301 may transmit information that inquires about whether to agree with the connection to the first external electronic device.

In operation 1019, the second external electronic device 501 (for example, the second external electronic device 501 of FIGS. 7A to 7B) may transmit information indicating agreement of the connection to the first external electronic device to the electronic device 301.

According to an embodiment, the second external electronic device 501 may inform of reception of connection request information from the first external electronic device from the electronic device and, when receiving information that inquires about whether to agree with the connection to the first external electronic device, display information that inquires about whether the electronic device agrees with the connection to the first external electronic device through a popup window on the display of the second external electronic device 501 since the electronic device received the connection request information from the first external electronic device.

According to an embodiment, the second external electronic device 501 may transmit information indicating agreement of the connection to the first external electronic device to the electronic device 301, based on a user's selection.

In operation 1111, the electronic device 301 (for example, the electronic device 101 of FIG. 1, the electronic device 301 of FIGS. 2A to 2C, and/or the electronic device 301 of FIG. 3) may release the connection to the second external electronic device 501.

In operation 1113, the electronic device 301 (for example, the electronic device 101 of FIG. 1, the electronic device 301 of FIGS. 2A to 2C, and/or the electronic device 301 of FIG. 3) may make a request for account information of the first external electronic device to the account server 701.

According to an embodiment, the electronic device 301 may make a request for account information of the first external electronic device to the account server 701.

In operation 1115, the account server 701 (for example, the account server 701 of FIG. 7B) may transmit account information of the first external electronic device to the electronic device 301.

According to an embodiment, the account server 701 may transmit the account information of the first external electronic device to the electronic device 301.

In operation 1117, the electronic device 301 (for example, the electronic device 101 of FIG. 1, the electronic device 301 of FIGS. 2A to 2C, and/or the electronic device 301 of FIG. 3) may complete the connection to the first external electronic device 401.

According to an embodiment, after performing the connection operation with the first external electronic device, the electronic device 301 may complete the connection to the first external electronic device 401.

In operation 1119, the electronic device 301 (for example, the electronic device 101 of FIG. 1, the electronic device 301 of FIGS. 2A to 2C, and/or the electronic device 301 of FIG. 3) may display a first color for identifying the first external electronic device in partial areas of the electronic device.

According to an embodiment, the electronic device 301 may identify first color information for identifying the first external electronic device in the account information of the first external electronic device received from the account server and display the first color corresponding to the first color information in partial areas of the electronic device.

According to an embodiment, the electronic device 301 may maintain displaying of the first color for identifying the first external electronic device while the electronic device is connected to the first external electronic device.

According to an embodiment, when a predetermined time passes while the first color for identifying the external electronic device is displayed in partial areas of the electronic device, the electronic device 301 may release displaying of the first color for identifying the first external electronic device.

When the first external electronic device 401 is initially connected to the electronic device 301, the electronic device 301 may make the first color for identifying the first external electronic device flicker and display the flickering first color in partial areas of the electronic device while a pairing operation with the first external electronic device 401 is performed, and when the pairing operation is completed and the connection to the first external electronic device is completed, release flickering of the first color for identifying the first external electronic device in partial areas of the electronic device and maintain displaying of the first color for identifying the first external electronic device.

A method by which an electronic device identifies an external electronic device connected to the electronic device according to an embodiment may include an operation of, when reception of a connection request from a first external electronic device is identified, identifying whether a second external electronic device is connected to the electronic device.

The method according to an embodiment may include an operation of, when it is identified that the second external electronic device is not connected to the electronic device, completing the connection to the first external electronic device.

The method according to an embodiment may include an operation of, when the connection to the first external electronic device is completed, displaying a first color for identifying the first external electronic device in partial areas of the electronic device to inform that the first external electronic device is connected to the electronic device.

The method according to an embodiment may further include an operation of identifying first color information for identifying the first external electronic device in account information of the first external electronic device.

The method according to an embodiment may further include an operation of making the first color flicker and display the flickering first color in the partial areas of the electronic device while performing a pairing operation for the connection to the first external electronic device.

The method according to an embodiment may further include an operation of, when the connection to the first external electronic device is completed after the pairing operation is completed, releasing flickering of the first color and maintaining displaying of the first color.

The method according to an embodiment may further include an operation of, when it is identified that the second external electronic device is connected to the electronic device, displaying a second color for identifying the second external electronic device in the partial areas of the electronic device to inform that the second external electronic device is connected to the electronic device.

The method according to an embodiment may include an operation of, when release of the connection to the second external electronic device is identified, completing the connection to the first external electronic device.

The method according to an embodiment may further include an operation of, when the connection to the first external electronic device is completed, displaying the first color for identifying the first external electronic device in the partial areas of the electronic device to display that the first external electronic device is connected to the electronic device.

The method according to an embodiment may include an operation of informing the second external electronic device connected to the electronic device of a connection request received from the first external electronic device.

The method according to an embodiment may further include an operation of, when the electronic device identifies agreement of the connection to the first external electronic device from the second external electronic device, releasing the connection to the second external electronic device.

A method of identifying an external electronic device connected to an electronic device according to an embodiment may include an operation of, by the electronic device, when it is identified that a second external electronic device is not connected to the electronic device according to a connection request of a first external electronic device, completing the connection to the first external electronic device and, when the connection to the first external electronic device is completed, displaying a first color for identifying the first external electronic device in partial areas of the electronic device to inform that the first external electronic device is connected to the electronic device.

The method according to an embodiment may include an operation of, by the external electronic device, when a request for a connection is made to the electronic device and the connection to the electronic device is completed in response to the request for the connection, displaying the first color in the partial areas of the first external electronic device.

The method according to an embodiment may include an operation of, by the electronic device, when it is identified that the second external electronic device is connected to the electronic device, transmitting connection state information indicating a connection to the second external electronic device to the first external electronic device.

The method according to an embodiment may further include an operation of, by the first external electronic device, when the connection state information is received from the electronic device, informing that the second external electronic device is connected to the electronic device by using second color information for identifying the second external electronic device included in the connection state information.

The method according to an embodiment may include an operation of, by the first external electronic device, when a request for the connection to the electronic device is received while it is informed that the second external electronic device is connected to the electronic device by using second color information for identifying the second external electronic device, transmitting a connection request to the electronic device.

The method according to an embodiment may further include an operation of, by the first external electronic device, when the connection to the electronic device is completed, informing of completion of the connection to the electronic device by using a first color for identifying the first external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection to an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101 or 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment of the disclosure, a nonvolatile storage medium storing instructions is provided. The instructions are configured to, when executed by an electronic device, cause the electronic device to perform at least one operation. The at least one operation may include an operation of, when reception of a connection request from a first external electronic device is identified, identifying whether a second external electronic device is connected to the electronic device, an operation of, when it is identified that the second external electronic device is not connected to the electronic device, completing a connection to the first external electronic device, and an operation of, when the connection to the first external electronic is completed, displaying a first color for identifying the first external electronic device in partial areas of the electronic device to inform that the first external electronic device is connected to the electronic device.

According to an embodiment of the disclosure, a nonvolatile storage medium storing instructions is provided. The instructions are configured to, when executed by an electronic device, cause the electronic device to perform at least one operation. The at least one operation may include an operation of, by the electronic device, when it is identified that a second external electronic device is not connected to the electronic device according to a connection request of a first external electronic device, completing the connection to the first external electronic device and, when the connection to the first external electronic device is completed, displaying a first color for identifying the first external electronic device in partial areas of the electronic device to inform that the first external electronic device is connected to the electronic device, and an operation of, by the external electronic device, when a request for a connection is made to the electronic device and the connection to the electronic device is completed in response to the request for the connection, displaying the first color in the partial areas of the first external electronic device.

## Claims

1. An electronic device comprising:
a communication module (190 of FIG. 1; 390 of FIG. 3);
a processor (120 of FIG. 1; 320 of FIG. 3); and
memory (130 of FIG. 1, 330 of FIG. 3; 430 of FIG. 4) storing instructions,
wherein the instructions, when executed by the processor, cause the electronic device to:
upon identifying reception of a connection request from a first external electronic device (FIGS. 2A to 2C; 401 of FIG. 4) through the communication module, identify whether a second external electronic device is connected to the electronic device;
upon identifying that the second external electronic device (501 of FIGS. 7A to 7C) is not connected to the electronic device, complete a connection to the first external electronic device; and
upon completing the connection to the first external electronic, display a first color for identifying the first external electronic device in a partial area of the electronic device to inform that the first external electronic device is connected to the electronic device.

2. The electronic device of claim 1, wherein the instructions, when executed by the processor, cause the electronic device to:
identify, from account information of the first external electronic device, first color information for identifying the first external electronic device.

3. The electronic device of claim 1 or 2, wherein the instructions, when executed by the processor, cause the electronic device to:
display the first color that is flickering in the partial area of the electronic device while performing a pairing operation for the connection to the first external electronic device; and
upon completing the connection to the first external electronic device after completion of the pairing operation, release flickering of the first color and maintain displaying of the first color.

4. The electronic device of one of claims 1 to 3, wherein the instructions, when executed by the processor, cause the electronic device to:
upon identifying that the second external electronic device is connected to the electronic device, display a second color for identifying the second external electronic device in a partial area of the electronic device to inform that the second external electronic device is connected to the electronic device;
inform the second external electronic device connected to the electronic device of a connection request received from the first external electronic device;
upon identifying agreement to the connection to the first external electronic device from the second external electronic device, release the connection to the second external electronic device;
upon identifying release of the connection to the second external electronic device, complete the connection to the first external electronic device through the communication module; and
upon completing the connection to the first external electronic device, display the first color for identifying the first external electronic device in the partial area of the electronic device to indicate that the first external electronic device is connected to the electronic device.

5. A system for identifying an external electronic device connected to an electronic device, the system comprising:
an electronic device (101 of FIG. 1, 301 of FIGS. 2A to 2C; 301 of FIG. 3) configured to, upon identifying that a second external electronic device is not connected to the electronic device according to a connection request of a first external electronic device, complete the connection to the first external electronic device, and upon completing the connection to the first external electronic device, display a first color for identifying the first external electronic device in a partial area of the electronic device to inform that the first external electronic device is connected to the electronic device; and
a first external electronic device (401 of FIGS. 2A to 2C or 301 of FIG. 4) configured to make a request for a connection to the electronic device, and upon completing the connection to the electronic device in response to the request for the connection, display the first color in a partial area of the first external electronic device.

6. The system of claim 5, wherein the electronic device (101 of FIG. 1, 301 of FIGS. 2A to 2C, or 301 of FIG. 3) is configured to, upon identifying that the second external electronic device is connected to the electronic device, transmit connection state information indicating the connection to the second external electronic device to the first external electronic device.

7. The system of claim 5 or 6, wherein the first external electronic device (401 of FIGS. 2A to 2C or 301 of FIG. 4) is configured to, upon receiving the connection state information from the electronic device, inform that the second external electronic device is connected to the electronic device by using second color information for identifying the second external electronic device included in the connection state information.

8. The system of one of claims 5 to 7, wherein the first external electronic device (401 of FIGS. 2A to 2C or 301 of FIG. 4) is configured to:
upon receiving a request for a connection to the electronic device while informing that the second external electronic device is connected to the electronic device by using the second color information for identifying the second external electronic device, transmit a connection request to the electronic device; and
upon completing the connection to the electronic device, inform of completion of the connection to the electronic device by using the first color for identifying the first external electronic device.

9. A method of identifying an external electronic device connected to an electronic device by the electronic device, the method comprising:
upon identifying reception of a connection request from a first external electronic device, identifying whether a second external electronic device is connected to the electronic device;
upon identifying that the second external electronic device is not connected to the electronic device, completing a connection to the first external electronic device; and
upon completing the connection to the first external electronic, displaying a first color for identifying the first external electronic device in a partial area of the electronic device to inform that the first external electronic device is connected to the electronic device.

10. The method of claim 9, further comprising identifying, form account information of the first external electronic device, first color information for identifying the first external electronic device.

11. The method of claim 9 or 10, further comprising:
displaying the first color that is flickering in the partial area of the electronic device while performing a pairing operation for the connection to the first external electronic device; and
upon completing the connection to the first external electronic device after completion of the pairing operation, releasing flickering of the first color and maintaining displaying of the first color.

12. The method of one of claims 9 to 11, further comprising:
upon identifying that the second external electronic device is connected to the electronic device, displaying a second color for identifying the second external electronic device in the partial area of the electronic device to inform that the second external electronic device is connected to the electronic device;
informing the second external electronic device connected to the electronic device of a connection request received from the first external electronic device;
upon identifying agreement to the connection to the first external electronic device from the second external electronic device, releasing the connection to the second external electronic device;
upon identifying release of the connection to the second external electronic device, completing the connection to the first external electronic device; and
upon completing the connection to the first external electronic device, displaying the first color for identifying the first external electronic device in the partial area of the electronic device to indicate that the first external electronic device is connected to the electronic device.

13. A method of identifying an external electronic device connected to an electronic device, the method comprising:
by the electronic device, upon identifying that a second external electronic device is not connected to the electronic device according to a connection request of a first external electronic device, completing the connection to the first external electronic device, and upon completing the connection to the first external electronic device, displaying a first color for identifying the first external electronic device in a partial area of the electronic device to inform that the first external electronic device is connected to the electronic device; and
by the external electronic device, making a request for a connection to the electronic device, and upon completing the connection to the electronic device in response to the request for the connection, displaying the first color in the partial area of the first external electronic device.

14. The method of claim 13, further comprising:
by the electronic device, upon identifying that the second external electronic device is connected to the electronic device, transmitting connection state information indicating the connection to the second external electronic device to the first external electronic device; and
by the first external electronic device, upon receiving the connection state information from the electronic device, informing that the second external electronic device is connected to the electronic device by using second color information for identifying the second external electronic device included in the connection state information.

15. The method of claim 13 or 14, further comprising:
by the first external electronic device, upon receiving a request for a connection to the electronic device while informing that the second external electronic device is connected to the electronic device by using the second color information for identifying the second external electronic device, transmitting a connection request to the electronic device; and
by the first external electronic device, upon completing the connection to the electronic device, informing of completion of the connection to the electronic device by using the first color for identifying the first external electronic device.
